# EUROPEAN PATENT APPLICATION

(11) **EP 4 851 511 A1**
(43) Date of publication of application: **09.12.2026**
(21) Application number: 25181486.9
(22) Date of filing: 06.06.2025
(51) Int. Cl.: F16L 23/16, F16L 25/02

(54) **FLANGE ARRANGEMENT AND METHOD OF HEATING A GAS**

(71) Applicant: Linde GmbH, 82049 Pullach (DE); Selas-Linde GmbH, 82049 Pullach (DE)
(72) Inventor: Mayerhofer, Matthias, 82049 Pullach (DE); Schwarz, Ernest, 82049 Pullach (DE); Lemme, Volkmar, 82049 Pullach (DE); Neuhäusler, Josef, 82049 Pullach (DE); Wellenhofer, Anton, 82049 Pullach (DE)
(74) Representative: Lu, Jing

(57) **Abstract**

A flange arrangement (100) including a first flange (10) comprising a flange bore (11) and a flange face (12), a second flange (20) comprising a flange bore (21) and a flange face (22), and an electrically insulating flange gasket (30) is proposed, wherein the flange face (12) of the first flange (10) faces towards the flange face (21) of the second flange (20), wherein the flange gasket (30) is arranged between the flange face (12) of the first flange (10) and the flange face (22) of the second flange (20), wherein the flange gasket (30) fluidly seals the flange face (12) of the first flange (10) towards the flange face (22) of the second flange (20) and electrically insulates the first flange (10) from the second flange (20), and wherein the flange bore (11) of the first flange (10), the flange gasket (30), and the flange bore (21) of the second flange (20) are provided in a coaxial arrangement providing a fluid passage (40). The flange arrangement (100) comprises an electrically insulating liner (50) in the fluid passage (40) and lining at least one of a section of the flange bore (11) of the first flange (10) adjacent to the flange gasket (30) and a section of the flange bore (21) of the second flange (20) adjacent to the flange gasket (30). A method of heating a gas is also proposed.

## Description

### Field

The present disclosure relates to a flange arrangement and a method of heating a gas.

### Background

In certain processes of the chemical industry, heated reaction tubes and reactors comprising heated reaction tubes may be used. Examples of such processes are steam cracking, certain embodiments of reforming processes, and dehydrogenation of alkanes, as described in the articles "Ethylene", "Gas Production" and "Propene" in Ullmann's Encyclopedia of Industrial Chemistry published online on 15 April 2009, 15 December 2006, and 15 June 2000, DOI: 10.1002/14356007.a22_211. In other cases, gases may be heated using heating tubes without, or without substantial, chemical reaction intended. Such applications include, e.g., heating of gas in connection with direct reduction of iron ore. As, in all cases, however, a heating of a gas or gas mixture is performed in tubes, including or not including an intended chemical reaction, the term "heating tubes" is used hereinbelow.

In certain cases, reaction and heating tubes produced from electrically conductive materials are required to be fluidly coupled to, and electrically insulated from, other tubes or tube sections. This may include, but is not limited to, distributors or collectors for gas to be supplied to, or withdrawn from, the heating tubes, wherein the heating tubes may be resistance heated by passing an electrical current therethrough.

For fluidly coupling, but electrically insulating tubes or tube sections, so-called flange isolation kits are available from certain manufacturers. These comprise sleeves around the screw shaft and washers that are electrically non-conductive and are fitted around conventional screws or washers. An electrically non-conductive seal is also required. The usual operating temperatures of such conventional kits are limited to temperatures in the range below 300 °C, however, making them incompatible with certain heating tasks. Special seals based on, e.g., phlogophite mica and special screw insulation kits made of insulation materials based on mineral fibres, e.g., can be used at temperatures up to 1,000 °C, but the distance between the flanges to be electrically insulated typically is, in such arrangements, limited by the thickness of the compressed gasket and is therefore only in the range of 1-2 millimetres. In a gas laden with conductive dust or particles, a conductive bridge could form in such cases, which would reduce the electrical insulation during operation.

For these reasons, there is the need for improved flange arrangements overcoming disadvanges of the prior art.

### Summary

The flange arrangement provided herein includes a first flange comprising a flange bore and a flange face, a second flange comprising a flange bore and a flange face, and an electrically insulating flange gasket, wherein the flange face of the first flange faces towards the flange face of the second flange, wherein the flange gasket is arranged between the flange face of the first flange and the flange face of the second flange, wherein the flange gasket fluidly seals the flange face of the first flange towards the flange face of the second flange and electrically insulates the first flange from the second flange, and wherein the flange bore of the first flange, the flange gasket, and the flange bore of the second flange are provided in a coaxial arrangement providing a fluid passage. The proposed flange arrangement comprises an electrically insulating liner in the fluid passage lining at least one of a section of the flange bore of the first flange adjacent to the flange gasket and a section of the flange bore of the second flange adjacent to the flange gasket.

The liner proposed herein creates a larger electrical distance, i.e., a region of electrical insulation, between the two electrically insulated flanges on the flow side surface. This makes it much more difficult for conductive dust particles to form bridges. In an embodiment, the insulating effect can be measured repeatedly during operation of the system, even if the inlet and outlet tubes are not completely electrically insulated.

In certain embodiments of the proposed flange arrangement, the liner and the flange gasket are provided as contiguous parts of a single material piece. In such embodiments, the liner may be provided by one or more collars of the gasket radially extending in the direction of the first and/or second flange. This allows a very reliable sealing eliminating ingress of particles.

**In** certain embodiments of the proposed flange arrangement, the liner and the flange gasket may be provided from different material pieces. This allows for optimizing the properties of both parts, e.g. in view of abrasion and heat resistance of the liner and/or compressibility and sealing properties of the gasket.

**In** certain embodiments of the proposed flange arrangement, the liner comprises an outwardly protruding radial fixing rim and at least one of the first and the second flange comprises a radial step adjacent to the flange face configured and dimensioned to receive the fixing rim. This allows for a particularly reliable fixation of the liner against a movement in an axial direction.

In certain embodiments of the proposed flange arrangement, the radial step comprises an annular face parallel to the flange face, an axial distance between the annular face and the flange face being adapted to an axial dimension of the fixing rim of the liner. In certain embodiments, the outwardly protruding radial fixing rim of the liner is fixated between the flange face and the sealing material and thereby held in place.

In certain embodiments of the proposed flange arrangement, the liner radially extends into the fluid passage. This allows for influencing flow parameters of the fluid passed through the fluid passage, as also explained below.

In certain embodiments of the proposed flange arrangement, an annular conductive element is embedded into the flange gasket. Alternatively, two flange gaskets surround the annular conductive element. This allows for a resistance measurement between parts of the flange arrangement.

For this reason, in certain embodiments of the proposed flange arrangement, means for a resistance measurement between the annular conductive element and at least one of the first flange and the second flange are provided. This can be a protrusion of the annular element inbetween the bolts of the flange connection that can be connected to a resistivity measurement device.

In certain embodiments of the proposed flange arrangement, at least one of the flange gasket and the annular conductive element may be provided with an enlarged inner diameter or a groove to receive an outwardly protruding rim of the liner. This provides an advantageous fixation solution for the liner.

In certain embodiments of the proposed flange arrangement, the flange gasket comprises a collar axially extending outside of the first flange and the second flange which serves to improve electrical insulation in the air gap between the two flanges in the outer part of the flange connection.

In certain embodiments of the proposed flange arrangement, at least a part of the first flange and the second flange comprises an insulating coating. This also serves to further improve electrical insulation.

A method of heating a gas using a tube assembly including a flange arrangement as described before is also proposed herein, particularly comprising a process as referred to elsewhere, e.g. in European patent application No. EP24220861.9. As to advantages and embodiments thereof, reference is made to the explanations above.

Particularly, the gas heated in an embodiment of the method proposed herein may comprise conductive particles selected from metal particles and carbonaceous particles and combinations thereof. The liner of the flange arrangement proposed herein creates a larger distance between conductive parts thereof.

Aspects of certain embodiments disclosed herein will now further be described with reference to the appended drawings, wherein
Figure 1 illustrates a flange arrangement not forming part of the invention;
Figures 2A to 2C illustrate flange arrangements as proposed herein;
Figures 3A to 3D illustrate flange arrangements as proposed herein and details thereof;
Figures 4A and 4B illustrate flange arrangements as proposed herein;
Figures 5A to 5C illustrate flange arrangements as proposed herein and details thereof;
Figures 6A to 6E illustrate flange arrangements as proposed herein.

### Embodiments

In the Figures, elements of identical, essentially identical, functionally comparable, or technically compatible function and/or purpose may be identified with identical reference numerals, and repeated explanations may be omitted for reasons of conciseness. Explanations herein relating to devices, apparatus, arrangements, systems, etc., according to certain embodiments disclosed herein likewise may apply to methods, processes, procedures, etc. according to corresponding embodiments.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention.

Various embodiments as disclosed herein may suitably comprise, consist of, or consist essentially of, appropriate and technically sensible combinations of the disclosed elements, components, features, parts, steps, means, etc., other than those specifically described herein. In addition, this disclosure may include other inventions not presently claimed, but which may be claimed in future, particularly when encompassed by the scope of the independent claims.

Aspects of the present disclosure relate to a flange, more specifically a tube flange, and flange arrangements comprising such flanges. A tube flange is a mechanical component used to connect tubes or pipes to other equipment such as valves, pumps, or other sections of piping. It plays a crucial role in forming a sealed and secure connection within a piping system. The main parts of a tube flange include the flange face, bore, hub, bolt holes, gasket surface, and the outer rim.

The flange face is the mating surface that comes into contact with another flange or a sealing element. Depending on the application, it can be a flat face, a raised face that helps concentrate sealing pressure on the gasket, or a ring-type joint that holds a metal gasket in a specially machined groove. Flanges according to the present disclosure particularly comprise flat or raised flange faces. The bore, or tube hole, is the central opening of the flange through which the fluid flows. It is sized to match the outer diameter of the tube to ensure a proper fit and smooth flow.

Connected to the bore is the hub, sometimes referred to as the neck. This section of a flange provides structural support and helps distribute stress evenly. The shape of the hub varies depending on the flange type. For example, a weld neck flange has a tapered hub for butt welding, while a slip-on flange has a straight hub that fits over the pipe. Threaded and socket weld flanges have different hub designs to accommodate specific installation methods. Surrounding the flange face are bolt holes, which are typically evenly spaced and used to fasten the flange to another flange, in a flange arrangement as proposed herein, or a different component. These flange bolts, often combined with a gasket, help create a tight seal.

Finally, the outer rim of the flange provides the surface for the bolt holes and serves as a gripping area during installation. Additional elements such as markings for pressure rating, flange size, and material specifications are usually stamped or engraved on the flange for identification and compliance with certain standards.

As used herein, the term "electrically insulating" refers to properties of a material that substantially inhibits the flow of electric current under certain operating conditions, particularly under high-temperature operating conditions, specifically in the range of approximately 500 °C to 1 000 °C. While no material is absolutely impervious to electrical conduction under all thermal and electrical stress conditions, an electrically insulating material in this context may be one that maintains a volume resistivity of at least 10⁶ ohm-centimeters (Ω·cm) at 500 °C, and preferably greater than 10³ Ω·cm at 1000 °C. Such materials typically limit leakage current to below 10 microamperes (µA) under an applied electric field of up to 10⁴ volts per centimeter (V/cm) in high-temperature environments. These materials may include specialized ceramics (e.g., alumina, magnesia, zirconia), glassy composites, mica, or certain engineered refractory insulators. While electrical resistivity generally decreases with temperature, materials meeting these criteria are considered practically insulating for use in high-temperature electrical, thermal, or structural applications where current suppression is required despite thermal extremes.

Areas of application of embodiments disclosed herein may include electrically heated furnaces or heaters as described in European patent application No. EP24220861.9 which has been mentioned above. This European patent application relates to an apparatus for heating a gas, comprising a heating chamber and heating tubes, wherein each of the heating tubes comprises an inlet section, an outlet section and an intermediate section arranged between the inlet section and the outlet section, wherein the intermediate sections of the heating tubes are arranged within the heating chamber, wherein the outlet sections of the heating tubes are electrically interconnected by an electrically conducting interconnection element, wherein the inlet sections of the heating tubes are electrically connected to different phases electric connectors of a multiphase electric power supply, and wherein the inlet sections of the heating tubes are fluidly connected to, and electrically isolated from, upstream tube sections by electrically insulating fluid connectors providing a galvanic separation of the inlet sections of the heating tubes and the upstream tube sections. The flange arrangements proposed herein may particularly be used as the electrically insulating fluid connector in an arrangement according to this European patent application.

Problems may arise, as already mentioned above, if the gas or gas mixture to be heated comprises conductive particles, because the distance between the flanges is relatively small and only corresponds to the thickness of the compressed gasket therebetween. Conductive particles can originate, for example, from a recycle stream of a reactor for direct reduction of iron ore, which may also contain residues from the abrasion of the pig iron pellets. In such a case, the particles are metallic particles. In the case of a preheated hydrocarbon-containing stream, such as in a steam cracking furnace, pre-cracking of the feed material can lead to coke deposits which are electrically conductive as well and which are the result of the deposition of carbonaceous particles.

Embodiments as proposed herein include, in addition to the electrically insulating flat gasket, a liner made of non-conductive material. This prevents the flowing, dust-laden medium from coming into contact with the conductive tube wall over a certain distance and makes bridging difficult or virtually impossible.

Different variants or embodiments of a flange arrangement proposed to overcome the disadvantages of the prior art will now be described in a general manner and thereafter with reference to the drawings.

In certain variants, the liner can be part of the gasket, or formed integrally therewith, which is then designed as a sleeve with a collar as a seal. The cylindrical part then acts as a liner. Alternatively, the liner is designed as a separate component (e.g. from a ceramics material) which has a cylindrical part and a short collar or flange that fits into a recess in the metal pipe flange. The gasket overlaps the collar or flange of the ceramic inlay, thus preventing dust particles from entering and forming a possible bridge between the two pipe flanges.

In one variant, the liner may be configured to protrude into the downstream flange only. In another variant, it can protrude into the upstream flange. In another variant, it can protrude in both directions. The liner can have the same inner radius as the pipe flanges. The liner can have a slightly larger inner radius in cold condition that compensates the different thermal elongation of the liner (e.g. ceramic) and the flange (steel) material that at operating temperature leads to the same inner radius of liner and flange. The liner can have a smaller inner diameter than the pipe and be shaped in such a way that it causes a local acceleration of the flow, which makes it difficult for particles to settle. The reduction in cross-section from the pipe to the liner is designed to minimise turbulence, flow separation or unnecessarily high pressure losses.

The constriction can also be used to distribute the flow evenly in several parallel passages, as in a Laval nozzle in the inlet piping of a cracking furnace. An insulated flange connection with flow from top to bottom can be provided. As an alternative to a liner, a non-conductive coating can also be used on the flow side of the flange.

In one design, the gasket can be provided in two-part form with a metal disc embedded therein between them. A connection pin on the disc is routed outwards between the bolts of the flange connection through the flange hubs, allowing the electrical insulation effect of the flange connection to be measured during operation of the flange arrangement. In one embodiment, the gasket is pulled over the outer part of the flange to also reliably insulate the outside of the connection. In one embodiment, a non-conductive coating can be used instead of a liner.

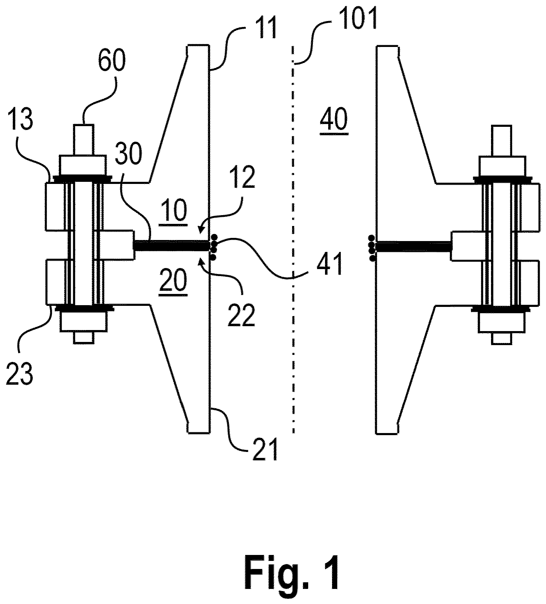

Figure 1 schematically illustrates a flange arrangement not forming part of the present invention in longitudinal section along a central axis 101.

The flange arrangement shown in Figure 1 includes a first flange 10 comprising a flange bore 11 and a flange face 12, a second flange 20 comprising a flange bore 21 and a flange face 22, and an electrically insulating flange gasket 30. As customary in the field, the flange face 12 of the first flange 10 faces towards the flange face 22 of the second flange 20, and the flange gasket 30 is arranged between the flange face 12 of the first flange 10 and the flange face 22 of the second flange. The flange gasket 30 fluidly seals the flange face 12 of the first flange 10 towards the flange face 22 of the second flange 20 and electrically insulates the first flange 10 from the second flange.

The flange bore 11 of the first flange 10, the flange gasket 30, and the flange bore 21 of the second flange 20 are provided in a coaxial arrangement providing a fluid passage 40. Flange hubs 13, 23 of the first flange 10 and the second flange 20 are secured towards each other using bolts 60 which are isolated towards the first flange 10 and the second flange 20 using suitable liner materials or coatings. The bolts 60 are used to urge the flange face 12 of the first flange 10 and the flange face 22 of the second flange 20 together, thereby compressing the gasket 30.

As mentioned, problems may arise if a fluid passed through the fluid passage 40 comprises electrically conductive particles 41, as these may bridge the relatively narrow isolating gap as provided by the gasket 30, particularly when deposited in a region of the gasket 30 over time.

To overcome this disadvantage, embodiments as proposed herein include certain forms of liners, as illustrated in the subsequent Figures in which, in each case, only one half of a flange arrangement (with regard to the axis 101) is illustrated. Each of the flange arrangements illustrated in the subsequent Figures is indicated with 100.

Each of the flange arrangements 100 as illustrated in the subsequent Figures comprises, besides the elements already explained in connection with Figure 1, an electrically insulating liner 50 in the fluid passage 40 lining at least one of a section of the flange bore 11 of the first flange 10 adjacent to the flange gasket 30 and a section of the flange bore 21 of the second flange 20 adjacent to the flange gasket 30.

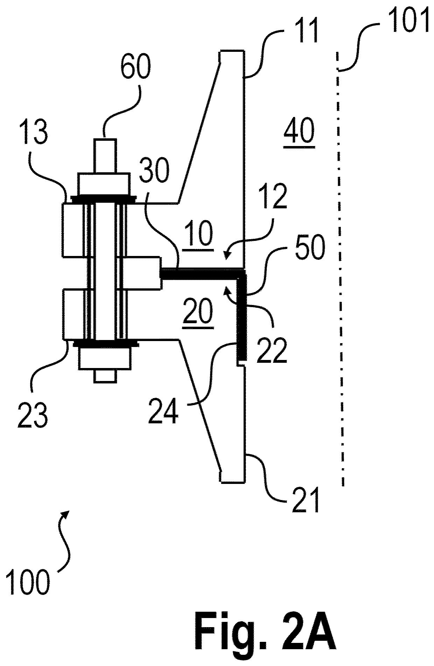

Figures 2A to 2C illustrate embodiments in which the liner 50 and the flange gasket 30 are provided as contiguous parts, i.e. as one-piece elements.

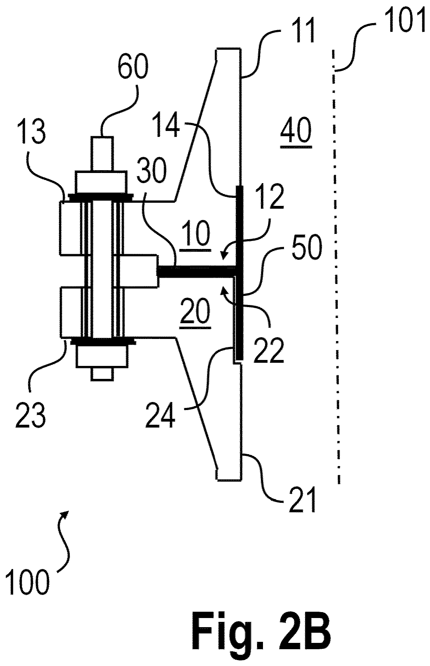

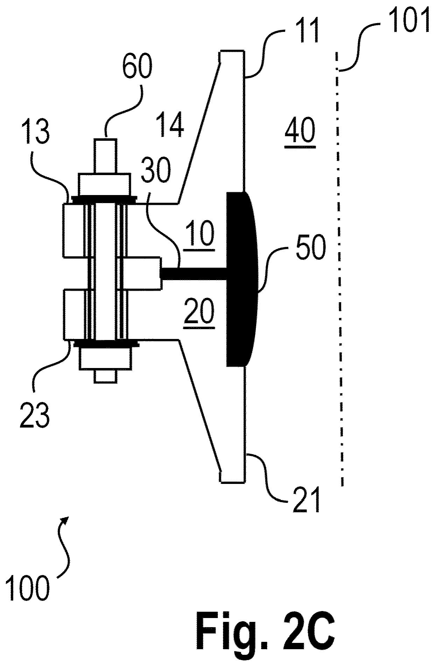

In the embodiment shown in Figure 2A, the liner 50 only lines a section of the flange bore 21 of the second flange 20 adjacent to the flange gasket 30, while in the embodiments shown in Figures 2B and 2C, the liner 50 lines a section of the flange bore 11 of the first flange 10 adjacent to the flange gasket 30 and a section of the flange bore 22 of the second flange 20 adjacent to the flange gasket 30. The sections lined by the liner 30 may be regions in which the flange bores 11, 21 comprise recesses 14, 24, as the case may be, in order to receive the liner 30. As shown in Figure 2C, where the designation of the flange faces 12, 22 and the recesses 14, 24 is omitted for reasons of conciseness, the liner 30 is configured to constrict the passage 40, such as to create a region of faster fluid speed, e.g. to reduce deposits by radially protruding to the inside of the bore 40. Different protrusion shapes may be provided.

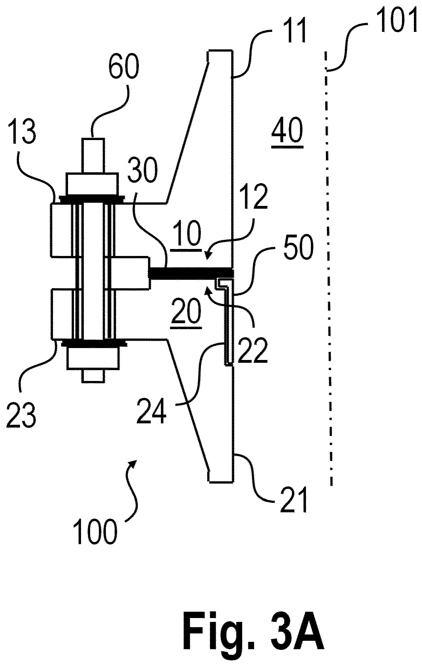

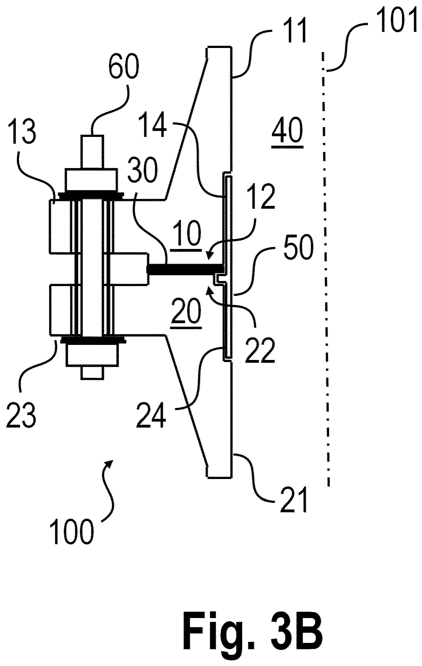

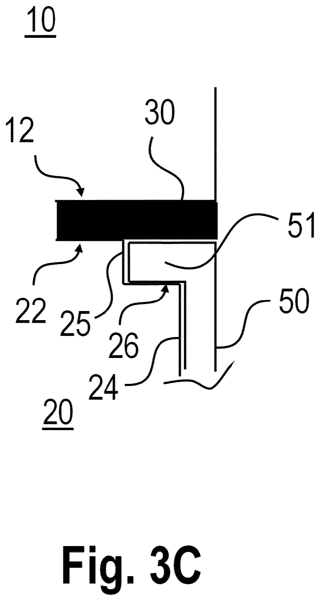

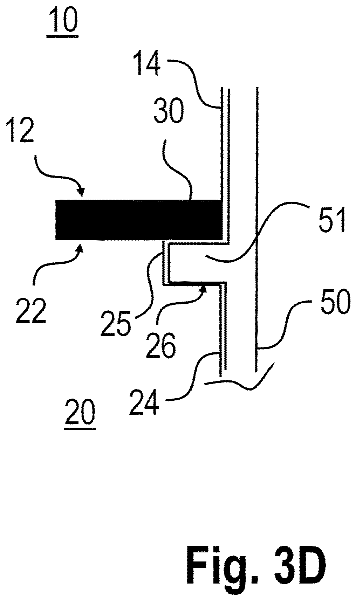

Figures 3A to 3D illustrate embodiments in which the liner 50 and the flange gasket 30 are provided as different parts, i.e. from different material pieces connected to each other. Figure 3C schematically illustrates further details of Figure 3A, and Figure 3D schematically illustrates further details of Figure 3B. In the embodiment shown in Figure 3A, the liner 50 only lines a section of the flange bore 21 of the second flange 20 adjacent to the flange gasket 30, while in the embodiment shown in Figure 3B, the liner 50 lines a section of the flange bore 11 of the first flange 10 adjacent to the flange gasket 30 and a section of the flange bore 22 of the second flange 20 adjacent to the flange gasket 30.

As shown in Figure 3C and 3D, the second flange 20 may comprise a radial step or recess 25 configured to receive an outwardly protruding radial fixing rim 51 of the liner 50 such as to restrict an axial movement of the liner 50. The radial step 25 comprises an annular face 26 parallel to the flange face 22, and an axial distance between the annular face 26 and the flange face 22 may be selected on the basis of an axial dimension of the fixing rim 51 of the liner 50. Particularly, the axial distance between the annular face 26 and the flange face 22 may be selected such that, in an unassembled state where the bolts 60 are not yet tightened, and the flange gasket 30 is not yet compressed, a radial gap may still be present between the liner 50 and the flange gasket 30, while this gap is closed, preventing ingress of particles, when the bolts 60 are tightened, compressing the flange gasket 30.

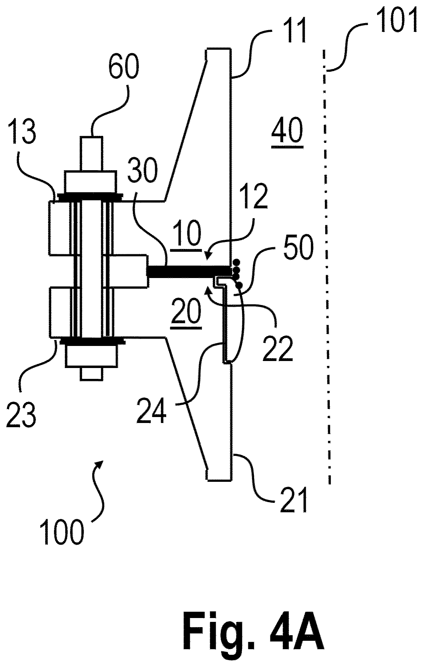

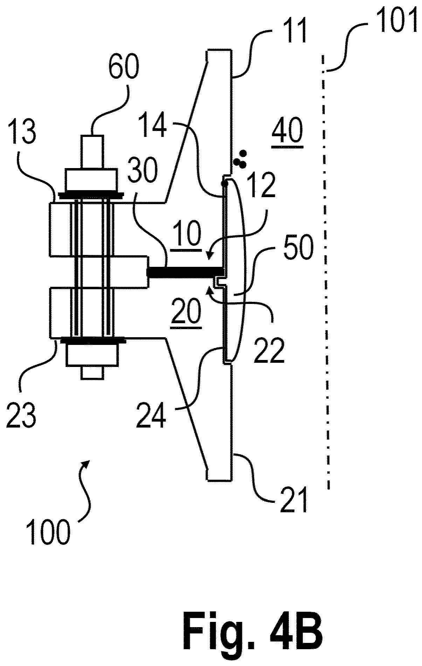

Figures 4A and 4B illustrate embodiments in which, such as in Figures 3A to 3D, the liner 50 and the flange gasket 30 are provided as different parts, i.e. from different material pieces. In the embodiment shown in Figure 4A, such as in the embodiment shown in Figure 3A, the liner 50 only lines a section of the flange bore 21 of the second flange 20 adjacent to the flange gasket 30, while in the embodiment shown in Figure 4B, such as in the embodiment shown in Figure 3B, the liner 50 lines a section of the flange bore 11 of the first flange 10 adjacent to the flange gasket 30 and a section of the flange bore 22 of the second flange 20 adjacent to the flange gasket 30.

Similar to what is shown in Figure 2C, the liner 50 is, according to the embodiments shown in Figures 4A and 4B, configured to constrict the passage 40, such as to create a region of faster fluid speed, e.g. to reduce deposits by radially protruding to the inside of the passage 40. Again, different shapes may be used.

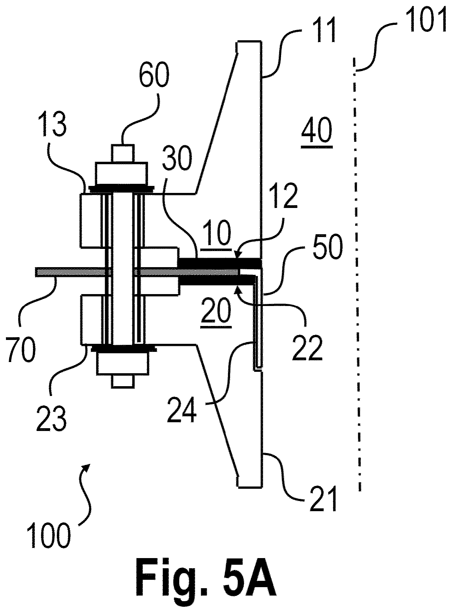

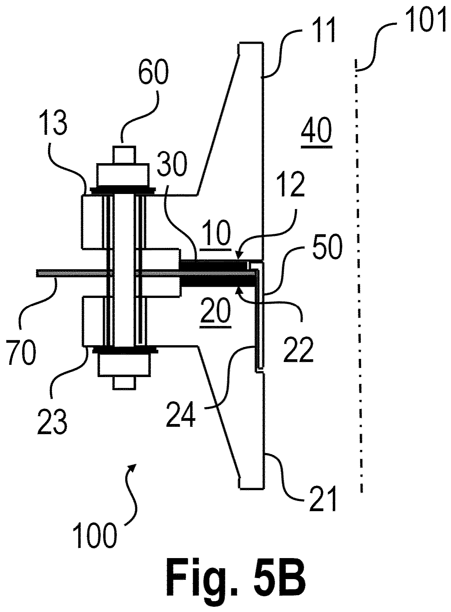

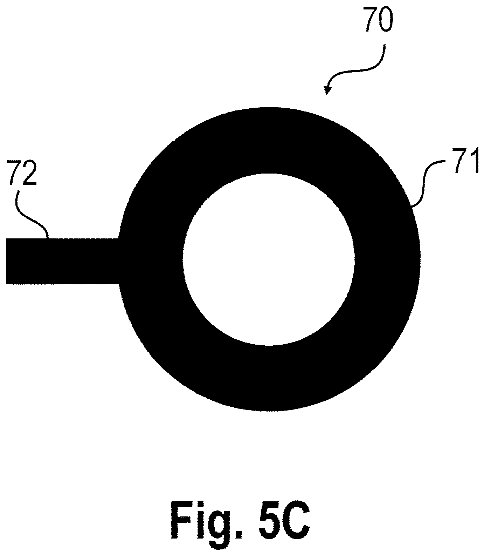

Figures 5A to 5C illustrate embodiments in which an annular conductive element 70 is embedded into the flange gasket 30 such as to enable for a resistance measurement between the annular conductive element 70 and at least one of the first flange 10 and the second flange 20. Axial sections are shown in Figures 5A and 5B, and a top view of the conductive element, comprising an annular region 71 and a connector 72, is shown in Figure 5C. The embodiments shown in Figures 5A and 5B differ in the arrangement of the conductive element 70 in relation to the liner 50, wherein an inner diameter of the annular region 71 of the conductive element is, in the embodiment shown in Figure 5A, dimensioned such as to allow a radially outwardly protruding rim of the liner 50 to be inserted therein. According to Figure 5B, the dimensioning is such as to allow the radially outwardly protruding rim of the liner 50 to sit on one side of the annular region 71, wherein the gasket 30 comprises a corresponding recess. Embodiments as shown in Fig. 5A and 5B enable a check during operation if the gasket still properly electrically isolates the flanges 10 and 20.

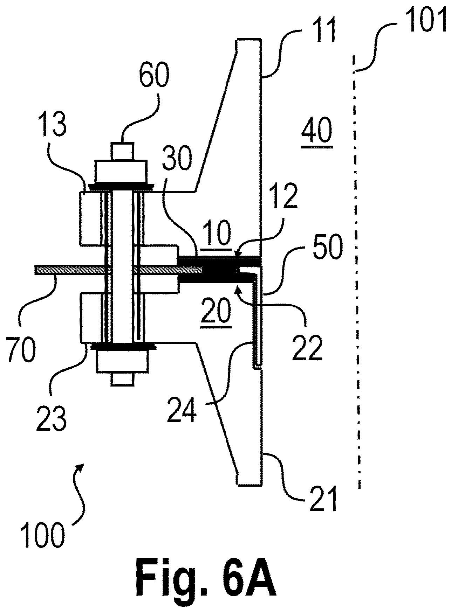

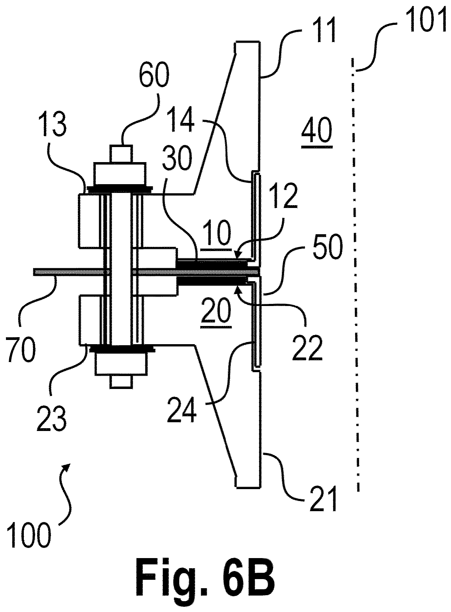

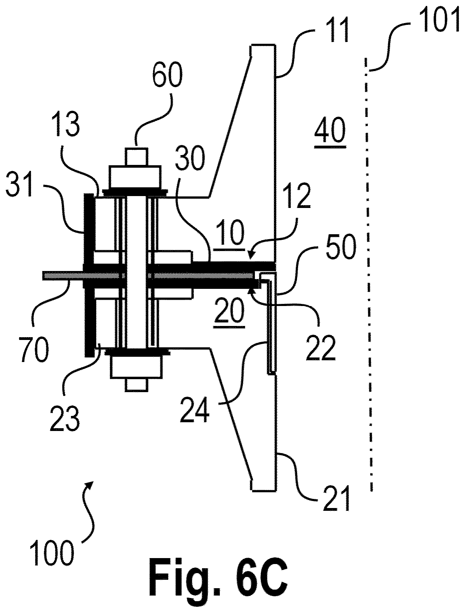

Figures 6A to 6E illustrate further embodiments in which an annular conductive element 70 is embedded into the flange gasket 30 such as to enable for a resistance measurement between the annular conductive element 70 and at least one of the first flange 10 and the second flange 20. For further details, reference is made to the explanations relating to Figures 5A to 5C above. The embodiments as shown in Figure 6B and Figure 6C enable for a check during operation if the gasket still isolated properly and if a dust bridge is building up over the flanges and liners.

The embodiments shown in Figures 6B and 6C differ in that, in the embodiment shown in Figure 6B, the liners 50 comprise rims seated in a region of the gasket 30 and in the embodiment shown in Figure 6C, the liners 50 comprise rims seated in a step or recess provided in the respective flange bores 21, 22.

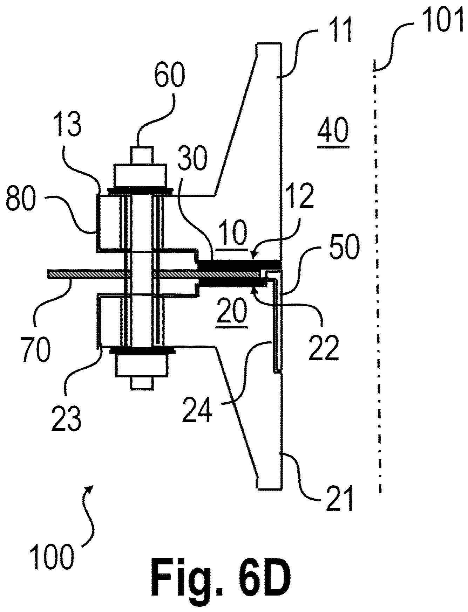

As illustrated in Figure 6D, the flange gasket may extend radially outwardly and may comprise a collar 31. As shown in Figure 6E, certain regions of the first flange 10 and the second flange 20 may be provided with an electrically insulated coating 80. This may include the regions in contact with the flange gasket or not.

The embodiments proposed herein create a large distance between the two electrically insulated flanges on the flow side surface. This makes it much more difficult for conductive dust particles to form bridges. The insulating effect can be measured repeatedly during operation of the system, even if the inlet and outlet pipes are not completely electrically insulated. This can be relevant in plants or apparatus similar or identical to that described in EP24220861.9, where the electrical setup includes a starbridge with a neutral conductor at the fluid outlet side of the heater that allows to support the downstream piping (externally or internally insulated) with connection to the steel structure that is in galvanic contact to the inlet piping via the piping supports of the inlet piping and the steel structure.

## Claims

1. A flange arrangement (100) including a first flange (10) comprising a flange bore (11) and a flange face (12), a second flange (20) comprising a flange bore (21) and a flange face (22), and an electrically insulating flange gasket (30), wherein the flange face (12) of the first flange (10) faces towards the flange face (21) of the second flange (20), wherein the flange gasket (30) is arranged between the flange face (12) of the first flange (10) and the flange face (22) of the second flange (20), wherein the flange gasket (30) fluidly seals the flange face (12) of the first flange (10) towards the flange face (22) of the second flange (20) and electrically insulates the first flange (10) from the second flange (20), and wherein the flange bore (11) of the first flange (10), the flange gasket (30), and the flange bore (21) of the second flange (20) are provided in a coaxial arrangement providing a fluid passage (40), **characterized in that** the flange arrangement (100) comprises an electrically insulating liner (50) in the fluid passage (40) lining at least one of a section of the flange bore (11) of the first flange (10) adjacent to the flange gasket (30) and a section of the flange bore (21) of the second flange (20) adjacent to the flange gasket (30).

2. The flange arrangement (100) according to claim 1, wherein the liner (50) and the flange gasket (30) are provided as contiguous parts of a single material piece.

3. The flange arrangement (100) according to claim 1, wherein the liner (50) and the flange gasket (30) are provided from different material pieces.

4. The flange arrangement (100) according to claim 3, wherein the liner (50) comprises an outwardly protruding radial fixing rim (51) and at least one of the first and the second flange (20) comprises a radial step (25) adiacent to the flange face (22) configured and dimensioned to receive the fixing rim (51).

5. The flange arrangement (100) according to claim 4, wherein the radial step (25) comprises an annular face (26) parallel to the flange face (22), an axial distance between the annular face (26) and the flange face (22) being selected on the basis of an axial dimension of the fixing rim (51) of the liner (50).

6. The flange arrangement (100) according to any one of the preceding claims, wherein the liner (50) radially extends into the fluid passage (40).

7. The flange arrangement (100) according to any one of the preceding claims, wherein an annular conductive element (70) is embedded into the flange gasket (30).

8. The flange arrangement (100) according to any one of the preceding claims, wherein an annular conductive element (70) is embedded inbetween two flange gaskets (30).

9. The flange arrangement (100) according to claim 7 or 8, wherein means for a resistance measurement between the annular conductive element (70) and at least one of the first flange (10) and the second flange (20) are provided.

10. The flange arrangement (100) according to any one of claims 7 to 9, wherein at least one of the flange gasket (30) and the annular conductive element is provided with an enlarged inner diameter or a groove to receive an outwardly protruding rim of the liner (50).

11. The flange arrangement (100) according to any one of the preceding claims, wherein the flange gasket (30) comprises a collar (31) axially extending outside of the first flange (10) and the second flange (20).

12. The flange arrangement (100) according to any one of the preceding claims, wherein at least a part of the first flange (10) and the second flange (20) comprises an insulating coating (80).

13. The flange arrangement (100) according to any one of the preceding claims, wherein the liner (50) comprises a ceramic material.

14. A method of heating a gas using a tube assembly including a flange arrangement (100) according to any one of the preceding claims.

15. The method according to claim 14, wherein the gas comprises metallic or carbonaceous conductive particles.
